# EUROPÄISCHE PATENTSCHRIFT

(11) **EP 0 568 921 B1**
(45) Veröffentlichungstag und Bekanntmachung des Hinweises auf die Patenterteilung: **12.11.1997**
(21) Anmeldenummer: 93106928.0
(22) Anmeldetag: 28.04.1993
(51) Int. Cl.: B60D 1/52, F16B 21/02

(54) **Kupplungseinrichtung**
Coupling device
Dispositif d'attelage

(30) Priorität: 05.05.1992 DE 4214823
(43) Veröffentlichungstag der Anmeldung: 10.11.1993
(73) Patentinhaber: ROCKINGER Spezialfabrik für Anhängerkupplungen GmbH & Co., D-80904 München (DE)
(72) Erfinder: Wohhüter, Gerhard, Dipl.-Ing. (FH), W-8000 München 50 (DE)
(74) Vertreter: Weickmann, Heinrich, Dipl.-Ing.

(56) Entgegenhaltungen:
- EP-A- 0 310 204
- EP-A- 0 383 394
- EP-A- 0 456 985
- WO-A-84/03666
- DE-A- 3 601 505
- DE-A- 3 710 772

## Beschreibung

Die Erfindung betrifft eine Kupplungseinrichtung mit zwei lösbar miteinander kuppelbaren Kupplungselementen, wobei die beiden Kupplungselemente in einer Kupplungsstellung mit jeweils einer Kontaktfläche in einer Kupplungsebene aneinander anliegen, wobei weiter ein erstes der Kupplungselemente an seiner Kontaktfläche eine mit wenigstens einer Hinterschneidung versehene Ausnehmung aufweist und ein zweites der Kupplungselemente an seiner Kontaktfläche einen mit wenigstens einem Verriegelungsvorsprung versehenen Zapfen aufweist, wobei weiter der Verriegelungsvorsprung in der Kupplungsstellung mit einem Wandabschnitt, welcher die Hinterschneidung zur Kupplungsebene hin begrenzt, formschlüssig zusammenwirkt.

Aus der EP-0 456 985 A2 ist eine Anhängerkupplung für Zugfahrzeuge bekannt, bei der zwei Kupplungselemente durch relatives Verschieben zueinander entlang einer in der Kupplungsebene liegenden Verschiebelinie miteinander gekoppelt werden. Dabei wird ein an einem der Kupplungselemente vorgesehener schwalbenschwanzförmig ausgebildeter Vorsprung in eine entsprechende Ausnehmung des anderen Kupplungselements eingeschoben. Diese bekannte Anhängerkupplung weist ferner ein Sicherungselement auf, welches in dem ineinander eingeschobenen Zustand der beiden Kupplungselemente ein unbeabsichtigtes Lösen der beiden Teile voneinander verhindert. Zur Verschiebung des Sicherungselements ist ein drehbares Scheibenelement vorgesehen, das mit einem exzentrisch daran angebrachten Stift in eine Umfangsausnehmung des Sicherungselements eingreift und bei seiner Drehung über den Stift das Sicherungselement zwischen seiner Sicherungsstellung und seiner Entsicherungsstellung hin und her bewegt. Es ist ferner ein Sperrelement vorgesehen, welches einen federvorgespannten Stift umfaßt, der bei Anordnung des Scheibenelements, und somit des Sicherungselements, in der Sicherungsstellung in eine am Scheibenelement ebenfalls exzentrisch angebrachte Sperrausnehmung eingreift. Das Sicherungselement ist dabei derart ausgebildet, daß es bei Annäherung der beiden Kupplungselemente aneinander durch eine Schrägfläche von einem der Kupplungselemente entgegen einer Federvorspannung aus seiner Sicherungsstellung in seine Entsicherungsstellung verschoben wird und bei vollständig ineinander eingeschobenen Kupplungselementen durch die Federvorspannung wieder in die Sicherungsstellung zurückkehrt und dabei in eine Sicherungsausnehmung des Kupplungselements eingreift, durch welches es gegen die Federvorspannung vorangehend zunächst in seine Entsicherungsstellung verschoben worden ist.

Aus der WO-84/03 666 ist eine Kupplungseinrichtung mit zwei miteinander koppelbaren Kupplungselementen bekannt, bei der die beiden Kupplungselemente durch Relativverschiebung entlang einer in der Kupplungsebene liegenden Verschieberichtung miteinander gekoppelt werden. An einem Kupplungselement, nämlich dem vom Fahrzeug lösbaren Kupplungselement, ist ein Sicherungselement vorgesehen, das durch Federvorspannung in eine entsprechende Öffnung des anderen Kupplungselements gedrückt wird und dadurch das lösbare Kupplungselement am fahrzeugfesten Kupplungselement sichert. Das Sicherungselement selbst ist wiederum durch ein Sperrelement gegen unbeabsichtigtes Lösen gesichert. Das Sperrelement umfaßt einen Stift, der in eine das Sicherungselement führende Hülse von Hand einführbar ist und somit das Sicherungselement gegen Verschiebung blockiert.

Eine Kupplungseinrichtung ist ferner aus der DE 37 10 772 A1 bekannt. Diese Kupplungseinrichtung dient zum Ankuppeln eines zugfahrzeug-seitigen Teils einer Anhängerkupplung an einer am Zugfahrzeug angebrachten Halteplatte. Mit Hilfe der bekannten Kupplungseinrichtung kann ein und dasselbe Zugfahrzeug zu unterschiedlichen Zeitpunkten mit unterschiedlichen zugfahrzeug-seitigen Anhängerkupplungsteilen ausgerüstet werden, d.h. es kann bspw. zwischen einer Maulkupplung und einer Kugelkopfkupplung gewechselt werden. Die bekannte Kupplungseinrichtung ist nach Art eines Bajonettverschlusses aufgebaut, d.h. zum Kuppeln wird ein mit Verriegelungsvorsprüngen versehener Zapfen an dem zugfahrzeug-seitigen Anhängerkupplungsteil in eine mit Hinterschneidungen versehene Ausnehmung in der Halteplatte eingeführt, bis das Anhängerkupplungsteil und die Halteplatte mit jeweiligen Kontaktflächen aneinander anliegen, und hierauf werden die Verriegelungsvorsprünge durch Verdrehen des Anhängerkupplungsteils um eine zu den Kontaktflächen im wesentlichen orthogonal verlaufende Richtung in Formschluß mit den die Hinterschneidungen zur Kontaktfläche hin begrenzenden Wandabschnitten der Halteplatte gebracht.

Um ein selbsttätiges Entkuppeln der beiden Kupplungselemente, Halteplatte und zugfahrzeug-seitiges Anhängerkupplungsteil, verhindern zu können, ist bei der bekannten Kupplungseinrichtung ein Sicherungselement in Form einer Kappe vorgesehen, welche nach dem Kuppeln von Hand über die beiden Kupplungselemente geklappt werden kann. Es ist jedoch auch möglich, diese Sicherungskappe nicht über Halteplatte und Anhängerkupplungsteil zu klappen, so daß dann bei Auftreten genügend hoher, um die zur Kontaktfläche im wesentlichen orthogonal verlaufende Richtung wirkender Drehmomente sich die Kupplung selbsttätig lösen kann.

Aus der EP-0 383 394 A2 ist eine Kupplungsvorrichtung bekannt, welche ein erstes an einem Fahrzeug festzulegendes Kupplungselement in der Form eines Kupplungsgehäuses umfaßt sowie ein zweites Kupplungselement umfaßt, welches an dem ersten Kupplungsteil wahlweise anbringbar und entfernbar ist. An dem ersten Kupplungselement ist eine Kupplungsklinke schwenkbar angebracht. Diese Kupplungsklinke hält im miteinander verbundenen Zustand der Kupplungselemente diese Kupplungselemente aneinander. Die Kupplungsklinke ist durch Federvorspannung in seine die beiden Kupplungselemente aneinander haltende Stellung vorgespannt und ist durch einen Handhebel in eine die beiden Kupplungselemente voneinander freigebende Stellung bewegbar.

Aus der EP-0 310 204 A1 ist eine Anhängerkupplung mit zwei voneinander trennbaren bzw. miteinander verbindbaren Kupplungselementen bekannt. Die beiden Kupplungselemente sind durch Relativverschiebung in einer Kupplungsebene zueinander in ihren miteinander verbundenen Zustand zu bringen, wobei eine Kupplungsplatte an einem der Kupplungselemente, nämlich dem entfernbaren Kupplungselement, Kupplungsvorsprünge am anderen, fahrzeugfesten Kupplungselement hintergreift. Ein am fahrzeugfesten Kupplungselement festgelegtes Sicherungselement ist näherungsweise orthogonal zur Kupplungsebene verlagerbar und ist in eine die beiden Kupplungselemente aneinander sichernde Stellung vorgespannt.

Aus der DE-36 01 505 A1 ist eine Anhängervorrichtung mit einer abnehmbaren Kupplungsstange bekannt, die durch Rastwirkung mit einem Kopplungsende derselben in einen mit einem fahrzeugfesten Kupplungselement gekoppelten Zustand gebracht werden kann.

Es ist die Aufgabe der vorliegenden Erfindung, eine Kupplungseinrichtung mit zwei lösbar miteinander koppelbaren Kupplungselementen vorzusehen, welche bei ergonomisch günstiger Betätigung ein hohes Ausmaß an Sicherheit vorsehen kann. Erfindungsgemaß wird diese Aufgabe durch die im Anspruch 1 angegebene Kupplungseinrichtung gelöst.

Bei der erfindungsgemäßen Einrichtung muß der Benutzer also nicht mehr dafür Sorge tragen, daß nach dem Kuppeln der beiden Kupplungselemente das Sicherungselement ordnungsgemäß in seine Sicherungsstellung übergeführt wird. Vielmehr wirken die beiden Kupplungselemente und die Vorspannung des Sicherungselements beim Kupplungsvorgang derart zusammen, daß das Sicherungselement automatisch in seine Sicherungsstellung übergeführt wird.

Die Überführung des Sicherungselements in dessen Entsicherungsstellung kann in einfacher Weise dadurch gewährleistet werden, daß an diesem eine Anlagefläche vorgesehen ist, die bei der Überführung der beiden Kupplungselemente aus der entkuppelten Stellung in die Kupplungsvorbereitungsstellung vor Erreichen der Kupplungsvorbereitungsstellung in Eingriff mit einer Gegenanlagefläche an dem anderen Kupplungselement gelangt, wobei das Sicherungselement durch den Eingriff der Anlagefläche und der Gegenanlagefläche bei der restlichen Bewegung in die Kupplungsvorbereitungsstellung aus seiner Sicherungsstellung in seine Entsicherungstellung verstellt wird.

Wenn an dem Sicherungselement und dem anderen Kupplungselement Sicherungsflächen ausgebildet sind, die bei vorliegender Kupplungsstellung der Kupplungseinrichtung und Sicherungsstellung des Sicherungselements miteinander zusammenwirken, kann mit einem einfach aufgebauten Sicherungselement ein selbsttätiges Entkuppeln der Kupplungselemente verhindert werden.

In einer Ausführungsform kann das Sicherungselement einen Bolzen umfassen, der in einer im Zapfen vorgesehenen Ausnehmung aufgenommen ist und mittels einer ebenfalls in dieser Ausnehmung aufgenommenen Feder, insbesondere einer Schraubendruckfeder, in die Sicherungsstellung vorgespannt ist, und ferner einen an dem Bolzen angeordneten Verstellhebel umfassen, mittels dessen der Bolzen in die Entsicherungsstellung verstellbar ist, wobei der Bolzen in der Sicherungsstellung in eine am anderen Kupplungselement ausgebildete, weitere Ausnehmung eingreift, wobei ferner die einander gegenüberliegenden Sicherungsflächen von der Außenumfangsfläche des Bolzens und der inneren Begrenzungsfläche der weiteren Ausnehmung gebildet sind.

In einer alternativen Ausführungsform kann das Sicherungselement einen Schwenkhebel umfassen, der mittels einer Feder, insbesondere einer Torsionsfeder, in die Sicherungsstellung vorgespannt ist und der in der Sicherungsstellung in eine am anderen Kupplungselement ausgebildete, weitere Ausnehmung eingreift.

Das Sicherungselement kann auf einer Schwenkachse schwenkbar gelagert sein.

Ferner kann vorgesehen sein, daß das Sicherungselement in seiner Sicherungsstellung gleichzeitig in einer Sicherungsausnehmung und in einer Führungsausnehmung, die von der Schwenkachse durchsetzt ist, an Führungsflächen dieser Ausnehmung anliegt.

Um sicherstellen zu können, daß auch die zweite Sicherung beim Kuppeln der Kupplungselemente automatisch hergestellt wird, wird in einer alternativen Ausführungsform vorgeschlagen, daß an dem Sperrelement und dem anderen Kupplungselement zusammenwirkende Verstellflächen vorgesehen sind, wobei bei einer Verstellung des Sicherungselements aus seiner Entsicherungsstellung in seine Sicherungsstellung das Sperrelement durch die Verstellflächen aus seiner Sperrstellung in seine Freigabestellung überführbar ist und wobei das Sperrelement im wesentlichen bei Erreichen der Sicherungsstellung infolge seiner Vorspannung selbsttätig in die Sperrstellung zurückkehrt.

In einer anderen alternativen Ausführungsform wird vorgeschlagen, daß an dem Sperrelement und dem einen Kupplungselement zusammenwirkende Verstellflächen vorgesehen sind, wobei bei einer Verstellung des Sicherungselements aus seiner Sicherungsstellung in seine Entsicherungsstellung das Sperrelement durch die Verstellflächen aus seiner Sperrstellung in seine Freigabestellung überführbar ist und wobei das Sperrelement in der Kupplungsstellung der Kupplungseinrichtung im wesentlichen bei Erreichen der Sicherungsstellung infolge seiner Vorspannung selbsttätig in die Sperrstellung zurückkehrt.

Wenn die Kupplungselemente derart ausgebildet sind, daß sie zum Kuppeln mit im wesentlichen parallel zueinander verlaufenden Kupplungsflächen in einer zur Kupplungsebene im wesentlichen orthogonal verlaufenden Richtung zusammenführbar sind, so können die Kupplungselemente in der Richtung zusammengeführt werden, in der vorzugsweise auch die Kraft zwischen den beiden Kupplungselementen übertragen wird. Im Falle einer Kupplung zwischen einer an einem Zugfahrzeug angebrachten Halteplatte und einem zugfahrzeug-seitigen Anhängerkupplungsteil kann das zugfahrzeug-seitige Anhängerkupplungsteil aus der gleichen Richtung an die Halteplatte herangeführt werden, wie nachfolgend die Deichsel des Anhängers.

Eine gleichmäßige Kraftübertragung zwischen den beiden Kupplungselementen kann bspw. dadurch erzielt werden, daß am von der Kontaktfläche fernen Ende des Zapfens vier Verriegelungsvorsprünge vorgesehen sind, die an dessen Außenumfang im wesentlichen äquidistant angeordnet sind und jeweils eine Winkelerstreckung von etwa 45° aufweisen.

Wenn eines der Kupplungselemente eine im wesentlichen rechteckförmige Kupplungsplatte aufweist, die im Bereich der Ecken des Rechtecks zur Befestigung an einer übergeordneten Baueinheit ausgebildet ist, insbesondere mit Bohrungen zur Aufnahme von Befestigungsbolzen versehen ist, so kann die Kupplungseinrichtung ohne konstruktive Änderungen in einfacher Weise in verschiedenen Anwendungsbereichen eingesetzt werden.

Ein vorteilhafter Verlauf der Kraftlinien von dem zweiten Kupplungselement in die diesem übergeordnete Baueinheit kann dadurch erzielt werden, daß die Verriegelungsvorsprünge des zweiten Kupplungselements in der Kupplungsstellung den Ecken der Kupplungsplatte im wesentlichen zugewandt angeordnet sind.

Separate Befestigungsvorrichtungen zwischen den Kupplungselementen und den ihnen jeweils übergeordneten Baueinheiten können dadurch eingespart werden, daß an wenigstens einem der Kupplungselemente die Ausnehmung bzw. der Zapfen einstückig ausgebildet ist. In diesem Fall ergibt sich darüber hinaus ein besonders günstiger Verlauf der Kraftlinien zwischen dem Kupplungselement und der ihm übergeordneten Baueinheit.

Die Erfindung wird im folgenden an einigen Ausführungsbeispielen an Hand der beiliegenden Zeichnungen näher erläutert werden. Es stellt dar:
- Fig. 1: eine perspektivische Ansicht einer ersten Ausführungsform der erfindungsgemäßen Kupplungseinrichtung;
- Fig. 2: eine Schnittansicht der Ausführungsform nach Fig. 1;
- Fig. 3: eine Schnittansicht entlang der Linie III-III in Fig. 2;
- Fig. 4: eine Ansicht analog Fig. 2 des das Sicherungselement tragenden Kupplungselements, wobei sich das Sicherungselement in seiner Entsicherungsstellung befindet;
- Fig. 5: eine Ansicht analog Fig. 2, wobei sich die beiden Kupplungselemente in ihrer Kupplungsstellung und das Sicherungselement sich kurz vor Erreichen der Sicherungsstellung befindet;
- Fig. 6: eine Ansicht analog Fig. 1 einer weiteren Ausführungsform der erfindungsgemäßen Kupplungseinrichtung;
- Fig. 7: eine Ansicht analog Fig. 2 der Ausführungsform gemäß Fig. 6;
- Fig. 8: eine Ansicht analog Fig. 1 einer dritten Ausführungsform der erfindungsgemäßen Kupplungseinrichtung;
- Fig. 9: eine Ansicht analog Fig. 2 der Ausführungsform gemäß Fig. 8; und
- Fig. 10: eine Ansicht zur Erläuterung der Herstellung der beiden Kupplungselemente der erfindungsgemäßen Kupplungseinrichtung.

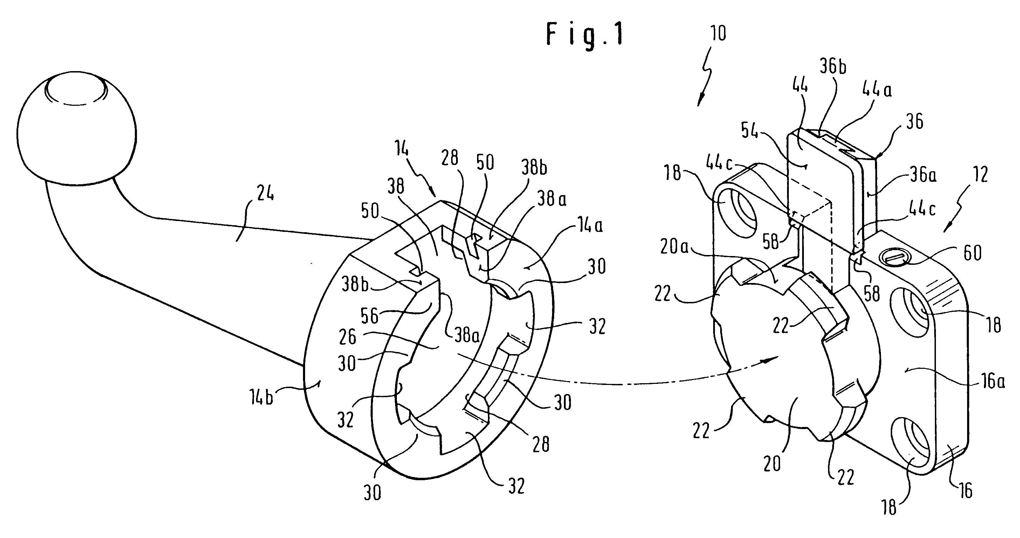

In Fig. 1 ist eine erste Ausführungsform der im folgenden mit 10 bezeichneten Kupplungseinrichtung dargestellt, welche ein erstes, zugfahrzeug-seitiges Kupplungselement 12 und ein zweites, anhängerkupplungs-seitiges Kupplungselement 14 umfaßt.

Das zugfahrzeug-seitige Kupplungselement 12 weist eine im wesentlichen rechteckförmige Halteplatte 16 auf, welche im Bereich der Ecken des Rechtecks von Bohrungen 18 durchsetzt ist. In diese Bohrungen 18 können Befestigungsbolzen (nicht dargestellt) eingesetzt werden, mittels derer das Kupplungselement 12 an einem (nicht dargestellten) Rahmenteil eines Zugfahrzeugs befestigt werden kann. Von einer Kontaktfläche 16a der Halteplatte 16 steht ein im wesentlichen zylinderförmiger Zapfen 20 vor. Am kontaktflächen-fernen Ende einer Außenumfangsfläche 20a des Zapfens 20 sind vier Verriegelungsvorsprünge 22 im wesentlichen äquidistant zueinander angeordnet.

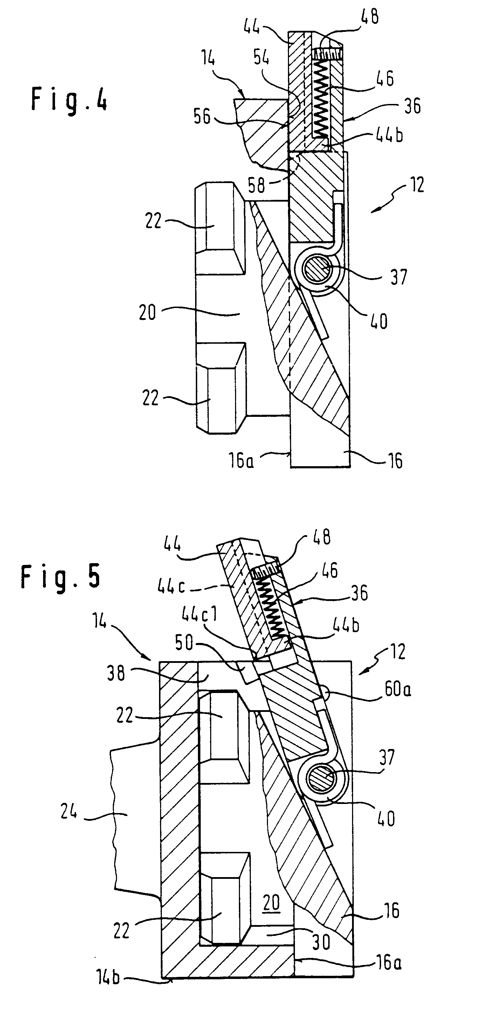

Wie in Fig. 1 dargestellt, weist das zweite Kupplungselement 14 keine den Befestigungsbohrungen 18 entsprechende Bohrungen auf. Vielmehr ist das Kupplungselement 14 einstückig mit der ihm übergeordneten Baugruppe, nämlich dem zugfahrzeug-seitigen Teil einer Kugelkopfkupplung 24, ausgebildet. Das Kupplungselement 14 weist eine mit Hinterschneidungen 28 versehene Ausnehmung 26 auf. Die Hinterschneidungen 28 werden zu einer Kontaktfläche 14a des zweiten Kupplungselements 14 hin durch nach innen vorstehende Wandabschnitte 30 begrenzt, deren Anzahl der Anzahl der Verriegelungsvorsprünge 22 am ersten Kupplungselement entspricht. Zwischen den Wandabschnitten 30 sind Einschuböffnungen 32 für die Verriegelungsvorsprünge 22 vorgesehen. Die Wandabschnitte 30 und die Einschubsöffnungen 32 sind derart angeordnet, daß in der gekuppelten Stellung der beiden Kupplungselemente 12 und 14 die Verriegelungsvorsprünge 22 die Wandabschnitte 30 hintergreifen und mit diesen form- und kraftschlüssig zusammenwirken (s. bspw. Fig. 5).

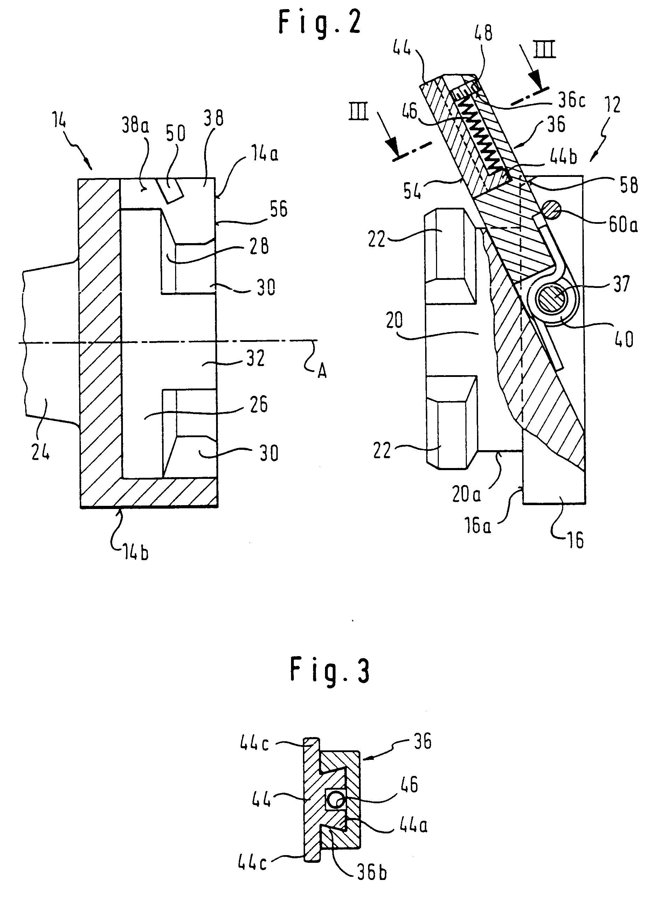

Um in der gekuppelten Stellung ein selbsttätiges Entkuppeln der beiden Kupplungselemente 12 und 14 verhindern zu können, ist an dem ersten Kupplungselement 12 ein Sicherungselement 36 angeordnet, welches um eine Schwenkachse 37 zwischen einer Entsicherungsstellung (siehe Fig. 4) und einer Sicherungsstellung (siehe Fig. 2) verschwenkbar ist. Eine Torsionsfeder 40 spannt das Sicherungselement 36 in seine Sicherungsstellung vor, so daß dieses auch nach einer unbeabsichtigten Auslenkung aus seiner Sicherungsstellung selbsttätig wieder in diese Sicherungsstellung zurückkehrt. Das Sicherungselement greift im gekuppelten Zustand in eine am zweiten Kupplungselement 14 ausgebildete Sicherungsausnehmung 38 ein. In dieser Stellung liegen zusammenwirkende Sicherungsflächen 36a des Sicherungselements 36 und 38a der Sicherungsausnehmung 38 einander gegenüber und sichern die beiden Kupplungselemente 12 und 14 formschlüssig gegen unbeabsichtigtes Entkuppeln durch Verdrehen.

Als zweite Sicherung zur Verhinderung eines selbsttätigen Verdrehens der beiden Kupplungselemente 12 und 14 ist an dem Sicherungselement 36 ein Sperrelement 44 angeordnet. Das Sperrelement 44 ist, wie am besten aus Fig. 3 zu ersehen ist, an dem Sicherungselement 36 mittels einer Schwalbenschwanzführung 44a/36b geführt. Es sind jedoch auch andere Arten von Führungen denkbar. Das Sperrelement 44 kann relativ zu dem Sicherungselement 36 zwischen einer Sperrstellung (siehe Fig. 1, 2 und 4) und einer Freigabestellung (siehe Fig. 5) verstellt werden. Wie bspw. aus Fig. 2 zu ersehen ist, ist das Sicherungselement 44 mittels einer Schraubendruckfeder 46 in die Sperrstellung vorgespannt. Die Schraubendruckfeder 46 stützt sich einenends an einem Vorsprung 44b des Sperrelements 44 und anderenends an einer Madenschraube 48 ab, welche in einer Gewindebohrung 36c im Sicherungselement 36 aufgenommen ist. Im gekuppelten Zustand der Kupplungselemente 12 und 14 greift das Sperrelement 44 bei Vorliegen der Sicherungsstellung des Sicherungselements 36 mit zwei Randflanschen 44c in zwei am zweiten Kupplungselement ausgebildete Sperrausnehmungen 50 ein und sperrt das Sicherungselement 36 gegen eine selbsttätige Auslenkung aus seiner Sicherungsstellung.

Wie nachfolgend an Hand der Figuren 1, 2, 4 und 5 beschrieben werden wird, werden das Sicherungselement 36 und das Sperrelement 44 beim Kuppeln der Kupplungselemente 12 und 14 automatisch, d.h. ohne daß vom Benutzer besondere Vorsorge hierfür getroffen werden muß, in ihre Sicherungs- bzw. Sperrstellungen übergeführt.

Zum Kuppeln der beiden Kupplungselemente wird das zweite Kupplungselement 14 zunächst, ausgehend von einer Stellung gemäß Fig. 2, um eine zur Kontaktfläche 14a im wesentlichen orthogonal verlaufende Achse A um etwa 45° gedreht, bspw. im Uhrzeigersinn. Hierauf wird das zweite Kupplungselement 14 an das Kupplungselement 12 herangeführt, wobei die beiden Kontaktflächen 14a und 16a zumindest gegen Ende der Heranführbewegung im wesentlichen parallel zueinander ausgerichtet sind. Durch die zuvor bewirkte Drehung des zweiten Kupplungselements 14 liegen nunmehr die Verriegelungsvorsprünge 22 den Einschuböffnungen 32 gegenüber.

Dann wird der Zapfen 20 in die Ausnehmung 26 eingeführt, wobei die Verriegelungsvorsprünge 22 in die Einschubsöffnungen 32 eingreifen. Hierbei gelangt eine Anschlagfläche 54 am Sicherungselement 36, genauer gesagt an dem auf ihm geführten Sperrelement 44, in Eingriff mit einer am zweiten Kupplungselement 14 angeordneten Gegenanschlagfläche 56. Infolge dieses Eingriffs wird das Sicherungselement 36 beim Einführen des Zapfens 20 in die Ausnehmung 26 entgegen der Kraft der Torsionsfeder 40 aus seiner in Fig. 2 dargestellten Sicherungsstellung in seine in Fig. 4 dargestellte Entsicherungsstellung verschwenkt.

Wenn die beiden Kontaktflächen 14a und 16a gegeneinander anliegen, so wird das zweite Kupplungselement 14 wiederum um etwa 45° gedreht, bspw. gegen den Uhrzeigersinn, so daß die Verriegelungsvorsprünge 22 die Wandabschnitte 30 form- und kraftschlüssig hintergreifen. Bei dieser Drehung gelangt auch die Sicherungsausnehmung 38 in Gegenüberlage zum Sicherungselement 36, so daß das Sicherungselement 36 nunmehr infolge seiner Vorspannung durch die Feder 40 in die Sicherungsausnehmung 38 hinein verschwenken kann, d.h. in Fig. 5 entgegen dem Uhrzeigersinn. In dieser Stellung sichert das Sicherungselement 36 die Kupplungselemente 12 und 14 formschlüssig gegen unbeabsichtigtes Entkuppeln durch Verdrehen.

Bei der Schwenkbewegung des Sicherungselements 36 in die Sicherungsausnehmung 38 hinein gelangen untere Kanten 44c1 der Randflansche 44c des Sperrelements 44 in Eingriff mit oberen Begrenzungsflächen 38b der Sicherungsausnehmung 38. Da sich das Sperrelement 44 somit nicht auf einer Kreisbahn um die Schwenkachse 37 des Sicherungselements 36 bewegen kann, wird es beim Verschwenken des Sicherungselements 36 in dessen Sicherungsstellung gegen die Kraft der Feder 46 aus seiner Sperrstellung gemäß Fig. 4 in seine Freigabestellung gemäß Fig. 5 verstellt. Hat das Sicherungselement 36 seine Sicherungsstellung erreicht, so liegen die Randflansche 44c des Sperrelements 44 den Sperrausnehmungen 50 gegenüber, so daß das Sperrelement infolge seiner Vorspannung durch die Feder 46 in diese Sperrausnehmungen 50 eingerastet wird. In dieser Stellung sperrt das Sperrelement 44 das Sicherungselement 36 gegen eine Verstellung aus dessen Sicherungsstellung in dessen Entsicherungsstellung und bildet somit eine zweite Sicherung gegen ein unbeabsichtigtes Entkuppeln der Kupplungseinrichtung 10.

Zum Entkuppeln muß ein Benutzer lediglich mit einer Hand das Sicherungselement 36 ergreifen, wobei er bspw. mit dem Daumen von der Anschlagfläche 54 her auf das Sperrelement 44 einwirkt. Er kann dann mit dem Daumen das Sperrelement 44 entgegen der Kraft der Feder 46 aus den Sperrausnehmungen 50 heraus aus dessen Sperrstellung in dessen Freigabestellung gemäß Fig. 5 überführen und dann das Sicherungselement 36 entgegen der Kraft der Feder 40 aus dessen Sicherungsstellung in dessen Entsicherungsstellung gemäß Fig. 4 verstellen. Mit der anderen Hand kann der Benutzer das zweite Kupplungselement 14 bzw. die an diesem angebrachte übergeordnete Baueinheit, bspw. die Kugelkopfkupplung 24, ergreifen und um die orthogonal zur Kontaktfläche 14a verlaufende Achse A um 45° drehen. Hierauf kann er das Sicherungselement 36 loslassen und das zweite Kupplungselement 14 vom ersten Kupplungselement 12 entfernen.

Gemäß Vorstehendem ergibt sich somit sowohl beim Kuppeln als auch beim Entkuppeln ergonomisch günstige Abläufe der vorzunehmenden Schritte . Beim Kuppeln müssen nämlich neben dem Heranführen des zweiten Kupplungselements 14 an das erste Kupplungselement 12 lediglich zwei Drehbewegungen um etwa 45° ausgeführt werden, von denen die eine bspw. im und die andere gegen den Uhrzeigersinn vorgenommen werden kann. Dies sind Drehbewegungen, die sich im normalen Drehbewegungsbereich des menschlichen Handgelenks befinden, so daß sie keine besonderen Anstrengungen für den Benutzer bedeuten. Da beim Einkuppeln sowohl das Sicherungselement 36 als auch das Sperrelement 44 selbsttätig in ihre Sicherungs- bzw. Sperrstellung übergeführt werden, kann der Kupplungsvorgang mit einer Hand ausgeführt werden.

Beim Entkuppeln kann die doppelte Sicherung durch Sperrelement 44 und Sicherungselement 36, wie vorstehend beschrieben, in einfacher Weise mit einer Hand gelöst werden, während das eigentliche Entkuppeln der beiden Kupplungselemente 12 und 14 wiederum mit zwei einfachen Drehungbewegungen um etwa 45° und dem dazwischen auszuführenden Abziehen des Kupplungselements 14 vom Kupplungselement 12 bewerkstelligt werden kann.

Nachzutragen ist, daß an dem ersten Kupplungselement 12 Auflaufschrägen 58 ausgebildet sind (siehe Fig. 2 und 4), welche ein Verschwenken des Sicherungselements 36 in dessen Entsicherungsstellung ermöglichen, ohne daß hierbei die Randflansche 44c des Sperrelements 44 in störende Wechselwirkung mit der Kontaktfläche 16a des ersten Kupplungselements 12 treten.

Da das Kupplungselement 14 einstückig mit der ihm übergeordneten Baueinheit 24 ausgebildet ist, kann es eine im wesentlichen zylinderförmig ausgebildete Außenumfangsfläche 14b aufweisen, die beim Kuppeln an keiner Stelle über den Umriß der Halteplatte 16 des ersten Kupplungselements 12 hinausragt.

Um die Kupplungseinrichtung im gekuppelten Zustand gegen Diebstahl des zweiten Kupplungselements 14 und der mit ihr verbundenen übergeordneten Baueinheit 24 schützen zu können, kann an dem ersten Kupplungselement 12 ein Schloß 60 (siehe Fig. 1) vorgesehen sein, dessen Schließzapfen 60a (siehe Fig. 2) das Sicherungselement 36 in dessen Sicherungsstellung hintergreifen kann und in dieser Stellung verhindert, daß unbefugte Personen das Sicherungselement 30 zum Entkuppeln der Kupplungseinrichtung aus seiner Sicherungsstellung verschwenken.

Für den Fall, daß kein zweites Kupplungselement 14 mit zugehöriger Baugruppe 24 an das erste Kupplungselement 12 angekuppelt werden soll, kann auf das erste Kupplungselement 12 eine Schutzabdeckung (nicht dargestellt) aufgesteckt werden, um dieses gegen Verschmutzung zu schützen.

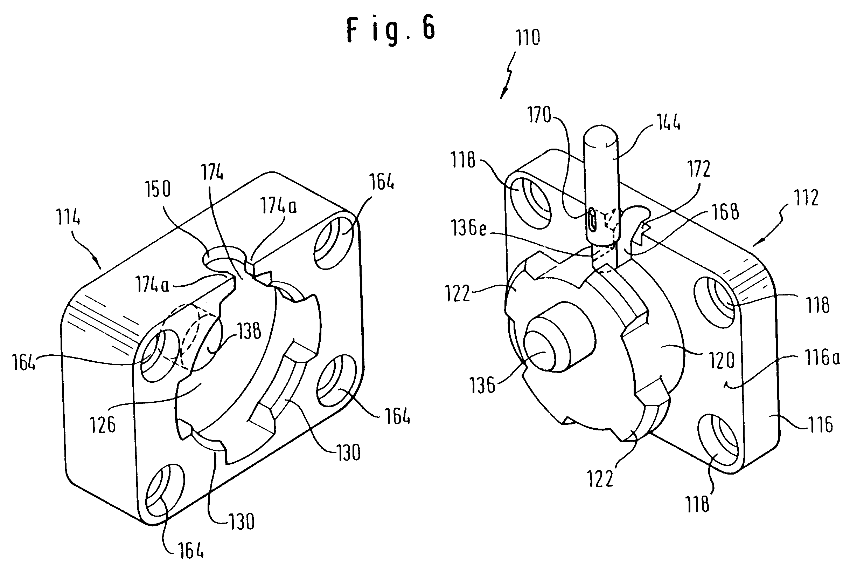

In Fig. 6 ist eine weitere Ausführungsform der erfindungsgemäßen Kupplungseinrichtung dargestellt, welche im wesentlichen der in den Figuren 1 bis 5 dargestellten Ausführungsform entspricht. In Fig. 6 sind daher analoge Teile mit gleichen Bezugszeichen versehen wie in den Figuren 1 bis 5, jedoch vermehrt um die Zahl 100. Die Ausführungsform gemäß Fig. 6 wird im folgenden nur insoweit beschrieben werden, als sie sich von der Ausführungsform gemäß den Figuren 1 bis 5 unterscheidet, im übrigen wird hiermit ausdrücklich auf die Beschreibung der Ausführungsform gemäß den Figuren 1 bis 5 Bezug genommen.

Die Kupplungseinrichtung 110 gemäß Fig. 6 unterscheidet sich von der Ausführungsform gemäß den Figuren 1 bis 5 zum einen dadurch, daß neben dem ersten Kupplungselement 112 auch das zweite Kupplungselement 114 mit Bohrungen 164 zur Aufnahme von (nicht dargestellten) Befestigungsbolzen zur Befestigung an der ihm übergeordneten Baueinheit aufweist. Darüber hinaus sind bei der Ausführungsform gemäß Fig. 6 das Sicherungselement 136 und das Sperrelement 144 anders ausgebildet als bei der Ausführungsform gemäß den Figuren 1 bis 5.

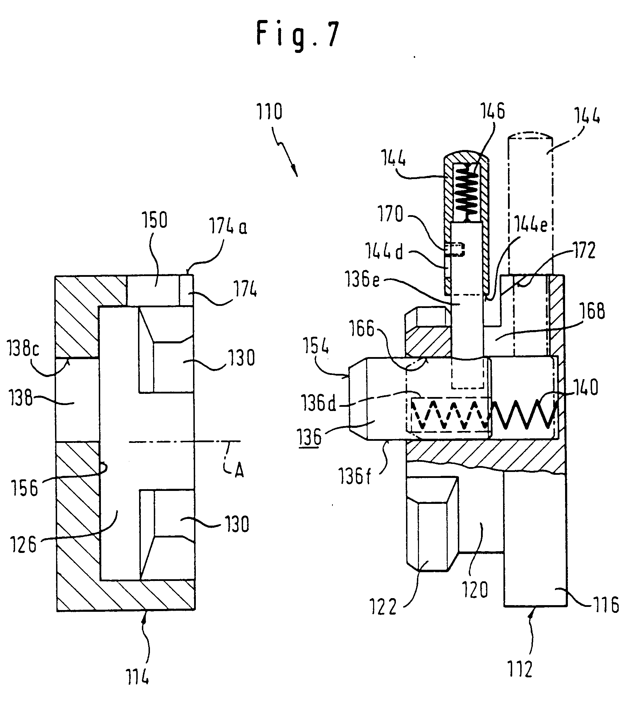

Wie insbesondere aus Fig. 7 zu ersehen ist, ist bei der Kupplungseinrichtung 110 das Sicherungselement von einem Bolzen 136 gebildet, der in einer im Zapfen 120 ausgebildeten Führungsbohrung 166 geführt ist. Der Sicherungsbolzen 136 kann in der Führungsbohrung 166 zwischen einer Sicherungsstellung (in Fig. 7 mit durchgezogenen Linien dargestellt) und einer Entsicherungsstellung (in Fig. 7 mit strichpunktierten Linien dargestellt) verstellt werden. Eine Schraubendruckfeder 140, die sich einenends an der Halteplatte 116 und andernends am Boden eines im Sicherungsbolzen 136 vorgesehenen Sacklochs 136d abstützt, spannt den Sicherungsbolzen 136 in dessen Sicherungsstellung vor. Die Bewegung des Sicherungsbolzens 136 aus der führungsbohrung 166 heraus wird durch einen am Sicherungsbolzen 136 befestigten Begrenzungshebel 136e begrenzt. Der Begrenzungshebel 136e ist in einem im Zapfen 120 und der Kalteplatte 116 ausgebildeten Führungsschlitz 168 geführt.

Im gekuppelten Zustand der Kupplungselemente 112 und 114 greift der Sicherungsbolzen 136 in seiner Sicherungsstellung in eine Sicherungsausnehmung 138 des zweiten Kupplungselements 114 ein. In dieser Stellung ist die Kupplungseinrichtung 110 durch Zusammenwirken der als Sicherungsflächen dienenden inneren Begrenzungsfläche 138c der Sicherungsausnehmung 138 einerseits und der äußeren Begrenzungsfläche 136f des Sicherungsbolzens 136 andererseits gegen ein unbeabsichtigtes Entkuppeln gesichert.

Auf dem Begrenzungshebel 136e ist das in dieser Ausführungsform hohlzylindrisch ausgebildete Sperrelement 144 teleskopisch geführt. Das Sperrelement 144 kann gegenüber dem Begrenzungshebel 136 zwischen einer Sperrstellung (in Fig. 7 durchgezogen dargestellt) und einer Freigabestellung (in Fig. 7 strichpunktiert dargestellt) verstellt werden. Die Verstellung zwischen diesen beiden Stellungen wird durch einen am Begrenzungshebel 136e angeordneten und in einem im Sperrelement 144 ausgebildeten Längsschlitz 144d geführten Stift 170 begrenzt. Das Sperrelement 144 ist durch eine Schraubenzugfeder 146 in seine Sperrstellung vorgespannt.

Beim Einführen des Zapfens 120 in die Ausnehmung 126 gelangt die als Anschlagfläche 154 dienende Stirnfläche des Bolzens 136 in Anlage an die Gegenanschlagfläche 156 am Boden der Ausnehmung 126 im Kupplungselement 114. Dies ist möglich, da zu diesem Zeitpunkt die beiden Kupplungselemente 112 und 114 um etwa 45° gegeneinander verdreht sind. Beim weiteren Zusammenführen der beiden Kupplungselemente 112 und 114 wird der Sicherungsbolzen 136 durch den Eingriff der beiden Flächen 154 und 156 entgegen der Kraft der Feder 140 in Fig. 7 nach rechts in seine Entsicherungsstellung verstellt. Hierbei gelangt ein in Fig. 7 unterer Rand 144e des Sperrelements 144 in Eingriff mit schrägen Auflaufflächen 172 der Halteplatte 116. Hierdurch wird das Sperrelement 144 infolge der Bewegung des Sicherungsbolzens 136 in seine Entsicherungsstellung entgegen der Kraft der Feder 146 aus seiner (in Fig. 7 durchgezogen dargestellten) Sperrstellung in seine (in Fig. 7 strichpunktiert dargestellte) Freigabestellung verstellt.
Nachdem die beiden Kupplungselemente 112 und 114 durch Verdrehen um 45° in ihre Kupplungsstellung übergeführt worden sind, d.h. die Verriegelungsvorsprünge 122 in Eingriff mit den Wandabschnitten 130 gebracht sind, ist die Sicherungsausnehmung 138 relativ zum Sicherungsbolzen 136 so angeordnet, daß dieser unter der Vorspannung der Feder 140 in seine Sicherungsstellung übergeführt werden kann, d.h. in die Sicherungsausnehmung 138 eingreifen kann. Hierbei tritt der Begrenzungshebel 136e in einen am zweiten Kupplungselement 114 ausgebildeten Führungsschlitz 174 ein, wobei der untere Rand 144e des Sperrelements 144 auf Begrenzungsflächen 174a gleitet, die ein Einfahren in seine Sperrstellung in Folge der Vorspannung der Feder 146 verhindern.

Der Führungsschlitz 174 öffnet sich in Richtung der Bewegung des Sicherungsbolzens aus seiner Entsicherungsstellung in seine Sicherungsstellung zu einer Sperrausnehmung 150 im wesentlichen kreisförmigen Querschnitts. Der Durchmesser der Ausnehmung 150 weist einen Wert auf, der etwas größer ist als der Außendurchmesser des Sperrelements 144, so daß das Sperrelement 144 dann, wenn das Sicherungselement 136 seine sicherungsstellung erreicht hat, durch die Vorspannung der Feder 146 in die Sperrausnehmung 150 eingerückt werden kann und somit das Sicherungselement 136 in seiner Sicherungsstellung sperrt.

Die Breite des Führungsschlitzes 174 weist einen Wert auf, der geringfügig größer ist als der Durchmesser des Begrenzungshebels 136e, jedoch kleiner als der Durchmesser des Sicherungselements 144. Somit ist zwar stets eine Bewegung des Begrenzungshebels 136e durch den Führungsschlitz 174 möglich, das Sicherungselement 144 kann jedoch durch eine in Richtung der Verstellung des Sicherungselements 136 zwischen seiner Sicherungsstellung und seiner Entsicherungsstellung wirkenden Kraft nicht aus seiner Sperrstellung, in der es in die Sperrausnehmung 150 eingerückt ist, ausgelenkt werden.

Auch bei dieser Ausführungsform ergibt sich eine ergonomisch günstige Betätigung der Kupplungseinrichtung 110 und zwar sowohl beim Kuppeln als auch beim Entkuppeln. Bezüglich des Kuppelns wird auf die entsprechenden, im Zusammenhang mit der Beschreibung des in den Figuren 1 bis 5 dargestellten Ausführungsbeispiels getroffenen Ausführungen verwiesen. Zum Entkuppeln muß der Benutzer das zylinderförmige Sperrelement 144 ergreifen und dies in Richtung seiner Zylinderachse in Fig. 7 entgegen der Kraft der Feder 146 nach oben aus der Sperrausnehmung 150 ausrücken und hierauf im wesentlichen orthogonal hierzu zur Kontaktfläche 116a des Kupplungselements 112 hin bewegen, um das Sicherungselement 136 aus seiner Sicherungsstellung in seine Entsicherungsstellung überzuführen. Mit der anderen Hand kann der Benutzer hierauf die beiden Kupplungselemente 112 und 114 wie vorstehend beschrieben entkuppeln.

Da in der Ausführungsform gemäß den Figuren 6 und 7 sowohl am Kupplungselement 112 als auch am Kupplungselement 114 Befestigungsbohrungen 118 bzw. 164 vorgesehen sind, kann die Kupplungseinrichtung 110 in einfacher Weise als Adapter zwischen verschiedenen "Lochbildern" eingesetzt werden. So können bspw. die Befestigungsbohrungen 118 gemäß dem in Deutschland üblichen Lochbild in die Halteplatte 116 eingebracht sein, so daß das Kupplungselement 112 an einem in Deutschland zugelassenen Fahrzeug angebracht werden kann. Die Befestigungsbohrungen 164 hingegen können am Kupplungselement 114 gemäß dem in Japan üblichen Lochbild vorgesehen sein. Somit kann an dem Kupplungselement 114 eine in Japan handelsübliche Anhängerkupplung angebracht werden und diese wiederum ohne weiteres über das Kupplungselement 112 an dem in Deutschland zugelassenen Fahrzeug.

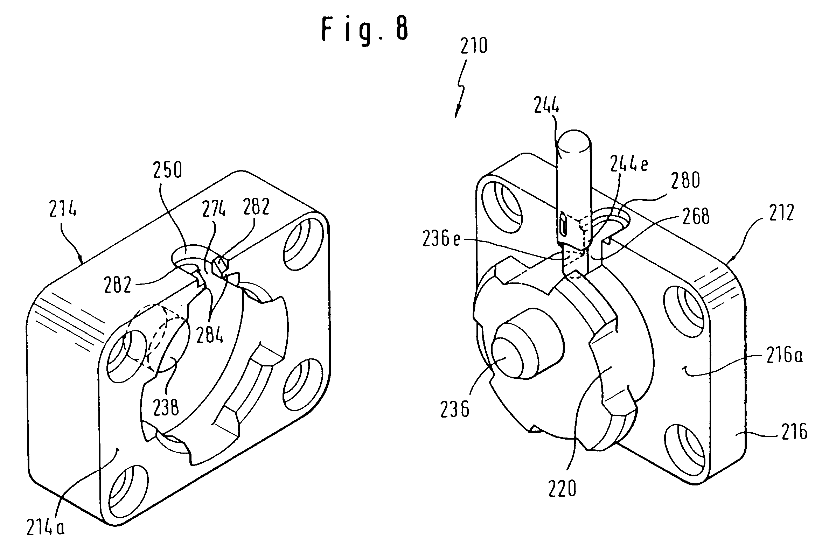

In Fig. 8 ist eine weitere Ausführungsform der erfindungsgemäßen Kupplungseinrichtung dargestellt, welche im wesentlichen der in den Figuren 6 und 7 dargestellten Ausführungsform entspricht. In Fig. 8 sind daher analoge Teile mit gleichen Bezugszeichen versehen wie in den Figuren 1 bis 5, jedoch vermehrt um die Zahl 200. Die Kupplungseinrichtung 210 wird im folgenden nur insoweit beschrieben werden, als sie sich von den vorstehend beschriebenen Ausführungsformen unterscheidet. Ansonsten wird hiermit ausdrücklich auf die Beschreibung dieser Ausführungsformen Bezug genommen.

Die Kupplungseinrichtung 210 unterscheidet sich von der Ausführungsform gemäß Fig. 6 lediglich durch die Ausbildung des Sperrelements 244 im Bereich des unteren Randes 244e sowie der mit diesem zusammenwirkenden Flächen und Ausnehmungen an den Kupplungselementen 212 und 214.

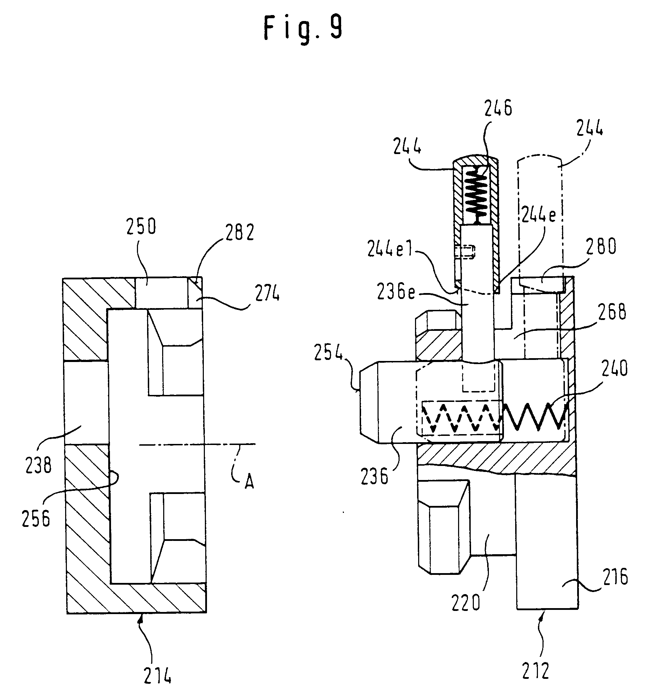

Im Unterschied zur Ausführungsform gemäß Fig. 6 sind an der Halteplatte 216 im Bereich des Führungsschlitzes 268 keine den Auflaufflächen 172 entsprechenden Auflaufflächen vorgesehen, sondern vielmehr ein stufenförmiger, den Führungsschlitz 268 umgebender Absatz 280 ausgebildet. Bei einer Bewegung des Sicherungsbolzens 236 aus seiner Sicherungsstellung (in Fig. 9 durchgezogen dargestellt) in seine Entsicherungsstellung (in Fig. 9 strichpunktiert dargestellt) wird der untere Rand 244e des Sperrelements 244 in dem Absatz 280 aufgenommen, wobei das Sperrelement 244 in seiner Sperrstellung verbleibt.

An dem beim Kuppeln dem Kupplungselement 214 zugewandten Abschnitt des unteren Randes 244e des Sperrelements 244 ist eine Auflaufschräge 244e1 ausgebildet. Diese Auflaufschrägen 244e1 wirken im gekuppelten Zustand der Kupplungselemente 212 und 214 bei einer Verstellung des Sicherungsbolzens 236 aus seiner Entsicherungsstellung in seine Sicherungsstellung mit schrägen Auflaufflächen 282 zusammen. Die Auflaufflächen 282 sind an den Führungsschlitz 274 für den Begrenzungshebel 236e festlegenden Vorsprüngen 284 am zweiten Kupplungselement 214 ausgebildet, um das Sperrelement 244 entgegen der Kraft der Feder 246 aus seiner Sperrstellung in seine Freigabestellung überzuführen. Hat das Sicherungselement 236 seine Sicherungsstellung erreicht, in welcher es in die Sicherungsausnehmung 238 eingreift, so gelangen die Auflaufflächen 282 außer Eingriff mit dem unteren Rand 244e des Sperrelements 244 und dieses wird durch die Kraft der Feder 246 in seine Sperrstellung übergeführt. In dieser Stellung greift es in die Sperrausnehmung 250 ein und verhindert durch Zusammenwirken mit den Vorsprüngen 284 ein unbeabsichtigtes Ausrücken des Sperrelements 244 aus dieser Stellung.

Zum Entkuppeln wird bei der Ausführungsform gemäß Fig. 8 genauso vorgegangen, wie bei der Ausführungsform gemäß Fig. 6.

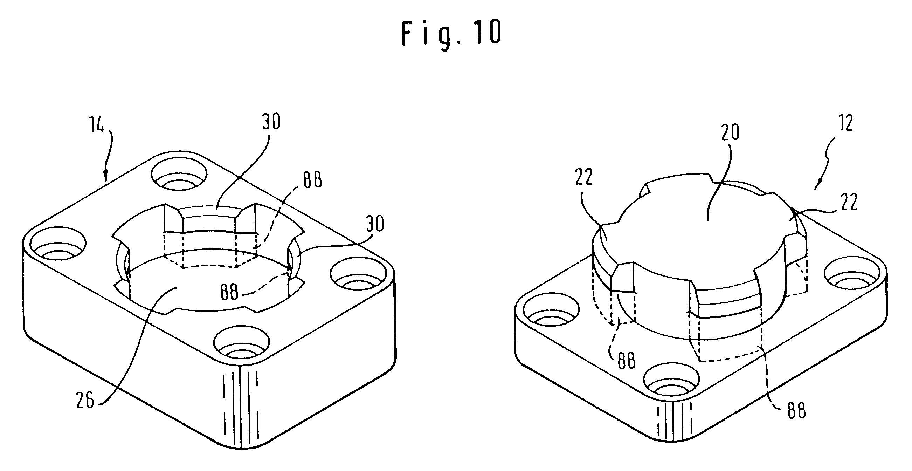

Alle drei vorstehend genannten Ausführungsformen zeichnen sich durch einfache Fertigbarkeit aus. Die Verriegelungsvorsprünge 22 am Zapfen 20 des ersten Kupplungselements sowie die in die Ausnehmung 26 des zweiten Kupplungselements vorstehenden Wandabschnitte 30 können beim Gießen bzw. Schmieden der Kupplungselemente 12 und 14 als durchgehende Nocken 88 angeformt werden, wie dies in Fig. 10 strichliert angedeutet ist. Aus diesen Nocken 88 können die Verriegelungsvorsprünge 22 bzw. die Wandabschnitt 30 dann in einem nachfolgenden, einfachen Drehbearbeitungsschritt herausgebildet werden. Auch bei der weiteren Bearbeitung der Kupplungselemente sind lediglich einfache Bohr- bzw. Fräsbearbeitungsschritte erforderlich.

Festzuhalten ist ferner, daß bei den Ausführungsformen gemäß den Figuren 1 bis 5 bzw. 8 und 9 die Federn 46 bzw. 246 schwächer ausgebildet sein müssen als die Federn 40 bzw. 240, da bei diesen Ausführungsformen das Sperrelement 44 bzw. 244 bei der Verstellung des Sicherungselements 36 bzw. 236 aus seiner Entsicherungsstellung in seine Sicherungsstellung in Folge der Vorspannung der Feder 40 bzw. 240 entgegen der Kraft der Feder 46 bzw. 246 aus seiner Sperrstellung in seine Freigabestellung übergeführt werden muß, um eine ordnungsgemäße Funktion der zweifachen Sicherung zu gewährleisten. Bei der Ausführungsform gemäß den Figuren 6 und 7 hingegen werden beide Federn 140 und 146 durch den Benutzer beim Kuppeln gespannt, nämlich dann, wenn der Sicherungsbolzen 136 in Folge des Eingriffs der Flächen 154 und 156 aus seiner Sicherungsstellung in seine Entsicherungsstellung verstellt wird und hierbei das Sperrelement 144 gegen die Auflaufflächen 172 anläuft und hierdurch aus seiner Freigabestellung in seine Sperrstellung übergeführt wird.

Sämtliche dargestellte Ausführungsformen sind mit Vorzug zur Anbringung von zugfahrzeug-seitigen Anhängerkupplungsteilen (bspw. der Kugelkopfkupplung 24) an einem Zugfahrzeug einsetzbar. Sie zeichnen sich hierbei durch geringen Platzbedarf aus, da das zweite Kupplungselement aus der gleichen Richtung an das erste Kupplungselement herangeführt wird, aus der anschließend auch eine Deichsel eines Anhängers an die Kupplungseinrichtung herangeführt wird. In dieser Richtung muß ohnehin ausreichender Bewegungsfreiraum vorhanden sein muß. Die beschriebenen Kupplungseinrichtungen lassen sich jedoch ebenso mit Vorteil zur Anbringung unterschiedlicher Zugösen an die Deichsel eines Anhängers einsetzen. Auch hierbei kann die Zugöse entweder mit einem der Kupplungselemente verschraubt oder mit diesem einstückig ausgebildet sein.

Die erfindungsgemäßen Kupplungseinrichtungen können in einer beliebigen Raumebene an den übergeordneten Baueinheiten angebracht sein, da die Hauptkräfte zwischen den Kupplungselementen 12 und 14 stets über die Wandabschnitte 30 und die Verriegelungsvorsprünge 22 übertragen werden. Somit kann das erste Kupplungselement 12 an einem Zugfahrzeug, bspw. in Fahrtrichtung gesehen, mit nach rechts, nach links, nach hinten oder nach unten weisendem Zapfen 20 montiert sein.

Schließlich sind die erfindungsgemäßen Kupplungseinrichtungen nicht nur zur Anbringung von Anhängerkupplungen geeignet. Vielmehr können sie auch zur Anbringung von Zusatzaggregaten, bspw. einem Fahrradträger, an einem Fahrzeug eingesetzt werden. Auch sind Anwendungen im Messebau, bei Baukastensystemen etc., denkbar. Zur Herstellung einer gelenkigen Verbindung zwischen zwei Baueinheiten können die beiden Kupplungselemente bspw. mit zueinanderpassenden Pfannenabschnitten ausgebildet sein. Diese Pfannenabschnitte bilden im gekuppelten Zustand der Kupplungselemente eine Kugelpfanne zur verschwenkbaren Aufnahme einer Kugel, die an einem der Kupplungselemente ausgebildet ist.

## Patentansprüche

1. Kupplungseinrichtung (10) mit zwei lösbar miteinander kuppelbaren Kupplungselementen (12,14),
wobei die beiden Kupplungselemente (12,14) in einer Kupplungsstellung mit jeweils einer Kontaktfläche (16a,14a) in einer Kupplungsebene aneinander anliegen,
wobei weiter ein erstes (14) der Kupplungselemente an seiner Kontaktfläche (14a) eine mit wenigstens einer Hinterschneidung versehene Ausnehmung (26) aufweist und ein zweites (12) der Kupplungselemente an seiner Kontaktfläche (16a) einen mit wenigstens einem Verriegelungsvorsprung (22) versehenen Zapfen (20) aufweist,
wobei weiter der Verriegelungsvorsprung (22) in der Kupplungsstellung mit einem Wandabschnitt (30), welcher die Hinterschneidung zur Kupplungsebene hin begrenzt, formschlüssig zusammenwirkt,
wobei weiter zur Herbeiführung der Kupplungsstellung die beiden Kupplungselemente (12,14) in einer Kupplungsvorbereitungsstellung bezüglich einer zu der Kupplungsebene orthogonalen Drehachse (A), in welcher der Verriegelungsvorsprung (22) und der Wandabschnitt (30) außer Dekkung sind, in Richtung der Drehachse bis zur Berührung der Kontaktflächen gegeneinander annäherbar und danach um die Drehachse (A) gegeneinander in die Kupplungsstellung verdrehbar sind, so daß der Verriegelungsvorsprung (22) den Wandabschnitt (30) form- und kraftschlüssig hintergreift,
wobei an einem (12) der beiden Kupplungselemente ein zwischen einer Sicherungsstellung und einer Entsicherungsstellung verstellbares Sicherungselement (36) vorgesehen ist, welches bei Vorliegen der Kupplungsstellung der Kupplungselemente (12,14) in seiner Sicherungsstellung die beiden Kupplungselemente (12,14) gegen Entkuppeln sichert, und wobei das Sicherungselement (36) eine Anschlagfläche (54) aufweist, welche bei der Annäherung der beiden Kupplungselemente (12,14) in Richtung der Drehachse (A) von dem anderen (14) der beiden Kupplungselemente getroffen wird und dem weiteren Verlauf dieser Annäherungsbewegung folgend einen Übergang des Sicherungselements (36) gegen Federkraft aus der Sicherungsstellung in die Entsicherungsstellung bewirkt und
an dem anderen Kupplungselement (14) eine Sicherungsausnehmung (38) vorgesehen ist, in welche das Sicherungselement (36) beim Vollzug der Verdrehung um die Drehachse (A) in die Kupplungsstellung unter Wirkung der Federkraft einfällt,
wobei ferner ein zwischen einer Sperrstellung und einer Freigabestellung bewegbares Sperrelement (44;144;244) vorgesehen ist, welches in seiner Sperrstellung und bei Vorliegen der Kupplungsstellung eine Verstellung des Sicherungselements (36;136;236) aus dessen Sicherungsstellung heraus verhindert, wobei das Sperrelement in die Sperrstellung vorgespannt ist,
wobei das Sperrelement (44;144;244) an dem Sicherungselement (36;136;136) bewegbar angebracht ist und das Sicherungselement (36;136;236) durch Einwirkung auf das Sperrelement (44;144;244) nach dessen Überführen in die Freigabestellung von seiner Sicherungsstellung in seine Entsicherungsstellung bewegbar ist.

2. Kupplungseinrichtung nach Anspruch 1, **dadurch gekennzeichnet**,
daß an dem Sicherungselement (36;136;236) und dem anderen Kupplungselement (14;114;214) Sicherungsflächen (36a,38a,136f,138c) ausgebildet sind, die bei Vorliegen der Kupplungsstellung der Kupplungseinrichtung (10;110;210) und der Sicherungsstellung des Sicherungselements (36;136;236) miteinander zusammenwirken und ein selbsttätiges Entkuppeln der Kupplungselemente (12,14;112,114;212,214) verhindern.

3. Kupplungseinrichtung nach Anspruch 1 oder 2, **dadurch gekennzeichnet**,
daß das Sicherungselement einen Schwenkhebel (36) umfaßt, der mittels einer Feder (40), insbesondere einer Torsionsfeder, in die Sicherungsstellung vorgespannt ist und der in der Sicherungsstellung in eine am anderen Kupplungselement (14) ausgebildete, weitere Ausnehmung (38) eingreift.

4. Kupplungseinrichtung nach einem der vorhergehenden Ansprüche, **dadurch gekennzeichnet**, daß das Sicherungselement (36) auf einer Schwenkachse (37) schwenkbar gelagert ist.

5. Kupplungseinrichtung nach einem der vorhergehenden Ansprüche, **dadurch gekennzeichnet**, daß das Sicherungselement (36) in seiner Sicherungstellung gleichzeitig in einer Sicherungsausnehmung (38) und in einer Führungsausnehmung, die von der Schwenkachse (37) durchsetzt ist, an Führungsflächen dieser Ausnehmungen anliegt.

6. Kupplungseinrichtung nach Anspruch 1 oder 2, **dadurch gekennzeichnet**,
daß das Sicherungselement einen Bolzen (36;136) umfaßt, der in einer im Zapfen (120;220) vorgesehenen Ausnehmung (166) aufgenommen ist und mittels einer ebenfalls in dieser Ausnehmung (166) aufgenommenen Feder (140), insbesondere einer Schraubendruckfeder, in die Sicherungsstellung vorgespannt ist, und einen an dem Bolzen (120;220) angeordneten Verstellhebel (136e;236e) umfaßt, mittels dessen der Bolzen (136; 236) in die Entsicherungsstellung verstellbar ist, wobei der Bolzen (136;236) in der Sicherungsstellung in eine am anderen Kupplungselement (114;214) ausgebildete, weitere Ausnehmung (138;238) eingreift, wobei ferner die einander gegenüberliegenden Sicherungsflächen von der Außenumfangsfläche (136f) des Bolzens (136;236) und der inneren Begrenzungsfläche (138c) der weiteren Ausnehmung (138;238) gebildet sind.

7. Kupplungseinrichtung nach einem der vorhergehenden Ansprüche, **dadurch gekennzeichnet**,
daß an dem Sperrelement (44;244) und dem anderen Kupplungselement (14;214) zusammenwirkende Verstellflächen (44c1,38b;244e1,282) vorgesehen sind, wobei bei einer Verstellung des Sicherungselements (36;236) aus seiner Entsicherungsstellung in seine Sicherungsstellung das Sperrelement (44;244) durch die Verstellflächen (44c1,38b;244e1,282) aus seiner Sperrstellung in seine Freigabestellung überführbar ist und wobei das Sperrelement (44;244) im wesentlichen bei Erreichen der Sicherungsstellung infolge seiner Vorspannung selbsttätig in die Sperrstellung zurückkehrt.

8. Kupplungseinrichtung nach einem der Ansprüche 1-6, **dadurch gekennzeichnet**,
daß an dem Sperrelement (144) und dem einen Kupplungselement (112) zusammenwirkende Verstellflächen (144e,172) vorgesehen sind, wobei bei einer Verstellung des Sicherungselements (136) aus seiner Sicherungsstellung in seine Entsicherungsstellung das Sperrelement (144) durch die Verstellflächen (144e, 172) aus seiner Sperrstellung in seine Freigabestellung überführbar ist und wobei das Sperrelement (144) in der Kupplungsstellung der Kupplungseinrichtung im wesentlichen bei Erreichen der Sicherungsstellung infolge seiner Vorspannung selbsttätig in die Sperrstellung zurückkehrt.

9. Kupplungseinrichtung nach einem der vorhergehenden Ansprüche, **dadurch gekennzeichnet**,
daß die Kupplungselemente (12,14;112,114;212, 214) derart ausgebildet sind, daß sie zum Kuppeln mit im wesentlichen parallel zueinander verlaufenden Kontaktflächen (16a,14a;116a,114a;216a,214a) in einer zur Kupplungsebene im wesentlichen orthogonal verlaufenden Richtung (A) zusammenführbar sind.

10. Kupplungseinrichtung nach einem der vorhergehenden Ansprüche, **dadurch gekennzeichnet**,
daß am von der Kontaktfläche (16a;116a;216a) fernen Ende des Zapfens (20;120;220) vier Verriegelungsvorsprünge (22;122;222) vorgesehen sind, die an dessen Außenumfang im wesentlichen äquidistant angeordnet sind und jeweils eine winkelerstreckung von etwa 45° aufweisen.

11. Kupplungseinrichtung nach einem der vorhergehenden Ansprüche, **dadurch gekennzeichnet**,
daß wenigstens eines der Kupplungselemente eine im wesentlichen rechteckförmige Kupplungsplatte (16; 116;216) aufweist, die im Bereich der Ecken des Rechtecks zur Befestigung an einer übergeordneten Baueinheit ausgebildet ist, insbesondere mit Bohrungen (18;118;218) zur Aufnahme von Befestigungsbolzen versehen ist.

12. Kupplungseinrichtung nach den Ansprüchen 10 und 11, **dadurch gekennzeichnet**,
daß die Verriegelungsvorsprünge (22;122;222) des zweiten Kupplungselements (12;112;212) in der Kupplungsstellung den Ecken der Kupplungsplatte (16;116; 216) im wesentlichen zugewandt angeordnet sind.

13. Kupplungseinrichtung nach einem der vorhergehenden Ansprüche, **dadurch gekennzeichnet**,
daß an wenigstens einem der Kupplungselemente (14) die Ausnehmung (26) bzw. der Zapfen einstückig ausgebildet ist.

## Claims

1. A coupling device (10) with coupling members (12,14) which can be releasably coupled together, wherein in a coupling position the two coupling members (12,14) adjoin one another in a coupling plane with a respective contact surface (16a,14a), also wherein a first one of the coupling members (14) has on its contact surface (14a) a recess (26) provided with at least one undercut and a second one of the coupling members (12) has on its contact surface (16a) a spigot (20) provided with at least one locking projection (22), also wherein in the coupling position the locking projection (22) co-operates with a wall portion (30) which defines the undercut towards the coupling plane, also wherein to bring about coupling the two coupling members (12,14) are accordingly positioned with respect to an axis of rotation (A) orthogonal to the coupling plane, in which the locking projection (22) and the wall portion (30) are out of registration, can approach one another in the direction of the axis of rotation until the contact surfaces come into contact, whereupon they can be rotated relative to one another about the axis of rotation (A) into the coupling position, so that the locking projection (22) engages behind the wall portion (30) in a form-locking and force-locking manner, wherein on one of the two coupling members (12) there is provided a securing member (36) which can be displaced between a securing position and a disengaged position and which in its securing position, with the coupling members (12,14) in their coupling position, prevents the two coupling members (12,14) from becoming disengaged, and wherein the securing member (36) has an abutment surface (54) which, as the two coupling members (12,14) approach one another in the direction of the axis of rotation (A), is encountered by the other one of the two coupling members (14) and following the continuation of this approach movement induces a transition of the securing member (36) counter to a spring force from the securing position into the disengaged position, and in the other coupling members (14) a securing recess (38) is provided in which the securing member (36) engages, upon completion of the rotation about the axis of rotation (A) into the coupling position under the action of the spring force, also wherein a locating member (44;144;244) is provided which can move between a locating position and a release position and which, in its locating position and with the coupling position prevailing, prevents any displacement of the securing member (36;136;236) out of its securing position, wherein the locating member is biased into the locating position, wherein the locating member (44;144;244) is mounted so as to move on the securing member (36;136;236) and the securing member (36;136;236) can be moved from its securing position into its disengaged by acting on the locating member (44;144;244) after its transfer into the release position.

2. A coupling device according to Claim 1, characterised in that on the securing member (36;136;236) and on the other coupling member (14;114;214) there are formed securing surfaces (36a,38a;136f,138c) which co-operate with one another in the coupling position of the coupling device (10;110;210) and the securing position of the securing member (36;136;236), and prevent any automatic disengagement of the coupling members (12,14;112,114;212,214).

3. A semi-trailer coupling device according to Claim 1 or 2, characterised in that the securing member comprises a pivotal lever (36) which is biased into the securing position by means of a spring (40), in particular a torsion spring, and which in the securing position engages in a further recess (38) formed in the other coupling member (14).

4. A coupling device according to any one of the preceding Claims, characterised in that the securing member (36) is pivotably mounted on a pivot axis (37).

5. A coupling device according to any of the preceding Claims, characterised in that in its securing position the securing member (36) is simultaneously applied against a securing recess (38) and a guide recess, through which the pivot axis (37) passes, against guide surfaces of these recesses.

6. A coupling device according to Claim 1 or 2, characterised in that the securing member comprises a projection (36;136) which is accommodated in a recess (166) provided in the spigot (120;220) and which is biased into the securing position by means of a spring (140), in particular a helical compression spring, also accommodated in said recess (166), and comprises a displaceable lever (136e;236e) which is disposed on the projection (120;220) and by means of which the projection (136;236) can be displaced into the disengaged position, wherein in the securing position the projection (136;236) engages in a further recess (138;238) formed in the other coupling member (114;214), and also wherein the mutual opposing securing surfaces are formed by the outer circumferential surface (136f) of the projection (136;236) and the inner boundary surface (138c) of the further recess (138;238).

7. A coupling device according to any one of the preceding Claims, characterised in that co-operating displacement surfaces (44c1,38b;244e1,282) are provided on the locating member (44;244) and on the other coupling member (14;214), wherein when the securing member (36;236) is displaced from its disengaged position into its securing position the locating member (44;244) can be transferred by the displacement surfaces (44c1,38b; 244e1,282) from its locating position into its release position, and wherein substantially upon reaching the securing position the locating member (44;244) automatically returns into the locating position as a result of its biasing.

8. A coupling device according to any one of Claims 1 to 6, characterised in that co-operating displacement surfaces (144e,172) are provided on the locating member (144) and on one coupling member (112), wherein when the securing member (136) is displaced from its securing position into its disengaged position the locating member (144) can be transferred by the displacement surfaces (144e,172) from its locating position into its release position, and wherein, in the coupling position of the coupling device, substantially upon reaching the securing position the locating member (144) automatically returns into the locating position as a result of its biasing.

9. A coupling device according to any one of the preceding Claims, characterised in that the coupling members (12,14;112,114;212,214) are so designed for coupling with contact surfaces (16a,14a;116a,114a;216a,214a) extending substantially parallel to one another that they can be brought together in a direction (A) extending substantially orthogonal to the coupling plane.

10. A coupling device according to any one of the preceding Claims, characterised in that at the end of the spigot (20;120;22) remote from the contact surface (16a;116a;216a) four locking projections (22;122;222) are provided, which are disposed substantially equidistantly on its outer circumference and each of which extend through an angle of approximately 45°.

11. A coupling device according to any one of the preceding Claims, characterised in that at least one of the coupling members has a substantially rectangular coupling plate (16;116;216) which in the vicinity of the corners of the rectangle is designed to be fastened to an assembly mounted thereabove, in particular with bores (18;118;218) to receive fastening bolts.

12. A coupling device according to Claims 10 and 11, characterised in that in the coupling position the locking projections (22;122;222) of the second coupling member (12;112;212) are disposed substantially facing the corners of the coupling plate (16;116;216).

13. A coupling device according to any one of the preceding Claims, characterised in that in at least one of the coupling members (14) the recess (26) or the spigot is formed in one piece.

## Revendications

1. Dispositif d'accouplement (10) avec deux éléments d'accouplement (12, 14) pouvant être accouplés entre eux de manière amovible,
dans une position d'accouplement, les deux éléments d'accouplement (12, 14) s'appliquant l'un contre l'autre dans un plan d'accouplement, avec chacun une surface de contact (16a, 14a),
un premier (14) des éléments d'accouplement présentant en outre sur sa surface de contact (14a), un évidement (26), pourvu au moins d'un détalonnage et un deuxième (12) des éléments d'accouplement présentant, sur sa surface de contact (16a), un tenon (20), pourvu au moins d'une saillie de verrouillage (22),
la saillie de verrouillage (22) coopérant en outre, par concordance de forme, dans la position d'accouplement, avec une portion de paroi (30), qui délimite le détalonnage vers le plan d'accouplement,
pour provoquer la position d'accouplement, les deux éléments d'accouplement (12, 14) pouvant en outre être approchés, dans une position de préparation à l'accouplement, par rapport à un axe de rotation (A), orthogonal au plan d'accouplement, dans laquelle la saillie de verrouillage (22) et la portion de paroi (30) ne se recouvrent pas, en direction de l'axe de rotation jusqu'au contact des surfaces de contact l'une contre l'autre et pouvant ensuite être tournés autour de l'axe de rotation (A) l'un par rapport à l'autre, dans la position d'accouplement, de sorte que la saillie de verrouillage (22) passe derrière la portion de paroi (30), par concordance de forme et par force,
sur l'un (12) des deux éléments d'accouplement étant prévu un élément de sûreté (36), déplaçable entre une position de sûreté et une position de déverrouillage, qui en présence de la position d'accouplement des éléments d'accouplement (12, 14), protège, dans sa position de sûreté, les deux éléments d'accouplement (12, 14) contre un désaccouplement, et l'élément de sûreté (36) présentant une surface de butée (54), qui au rapprochement des deux éléments d'accouplement (12, 14) en direction de l'axe de rotation (A), est heurtée par l'autre (14) des deux éléments d'accouplement et provoque, suivant la poursuite de ce mouvement d'approche, un passage de l'élément de sûreté (36), à l'encontre d'une force élastique, de la position de sûreté dans la position de déverrouillage et
sur l'autre élément d'accouplement (14) étant prévu un évidement de sûreté (38), dans lequel l'élément de sûreté (36) tombe dans la position d'accouplement, sous l'effet de la force élastique, lors de l'exécution de la rotation autour de l'axe de rotation (A),
un élément de blocage (44 ; 144 ; 244), déplaçable entre une position de blocage et une position d'autorisation, étant en outre prévu, lequel, dans sa position de blocage et en présence de la position d'accouplement, empêche un déplacement de l'élément de sûreté (36 ; 136 ; 236) à partir de sa position de sûreté, l'élément de blocage étant précontraint dans la position de blocage,
l'élément de blocage (44 ; 144 ; 244) étant placé mobile sur l'élément de sûreté (36 ; 136 ; 236) et l'élément de sûreté (36 ; 136 ; 236) étant déplaçable de sa position de sûreté dans sa position de déverrouillage, après son passage dans la position d'autorisation.

2. Dispositif d'accouplement selon la revendication 1, caractérisé
en ce que sur l'élément de sûreté (36 ; 136 ; 236) et sur l'autre élément d'accouplement (14 ; 114 ; 214) sont formées des surfaces de sûreté (36a, 38a ; 136f, 138c), qui en présence de la position d'accouplement du dispositif d'accouplement (10 ; 110 ; 210) et de la position de sûreté de l'élément de sûreté (36 ; 136 ; 236), coopèrent entre eux et empêchent un désaccouplement automatique des éléments d'accouplement (12, 14 ; 112, 114 ; 212, 214).

3. Dispositif d'accouplement selon la revendication 1 ou 2, caractérisé
en ce que l'élément de sûreté comprend un levier de pivotement (36), qui est précontraint dans la position de sûreté, au moyen d'un ressort (40), en particulier d'un ressort de torsion et qui, dans la position de sûreté, s'engage dans un autre évidement (38), formé sur l'autre élément d'accouplement (14).

4. Dispositif d'accouplement selon l'une des revendications précédentes, caractérisé en ce que l'élément de sûreté (36) est monté pivotant sur un axe de pivotement (37).

5. Dispositif d'accouplement selon l'une des revendications précédentes, caractérisé en ce que l'élément de sûreté (36), dans sa position de sûreté, s'applique simultanément dans un évidement de sûreté (38) et dans un évidement de guidage, qui est traversé par l'axe de pivotement (37), contre des surfaces de guidage de ces évidements.

6. Dispositif d'accouplement selon la revendication 1 ou 2, caractérisé
en ce que l'élément de sûreté comprend un axe (36 ; 136), qui est logé dans un évidement (166) prévu dans le tenon (120 ; 220) et qui est précontraint dans la position de sûreté, au moyen d'un ressort (140), en particulier un ressort de pression hélicoïdal, logé également dans cet évidement (166), et comprend un levier de réglage (136e ; 236e), placé sur l'axe (120 ; 220), au moyen duquel l'axe (136 ; 236) peut être déplacé dans la position de déverrouillage, l'axe (136 ; 236) s'engageant, dans la position de sûreté, dans un autre évidement (138 ; 238), formé sur l'autre élément d'accouplement (114 ; 214), les surfaces de sureté opposées l'une à l'autre étant en outre formées par la surface périphérique extérieure (136f) de l'axe (136 ; 236) et de la surface de délimitation intérieure (138c) de l'autre évidement (138 ; 238).

7. Dispositif d'accouplement selon l'une des revendications précédentes, caractérisé
en ce que sur l'élément de blocage (44 ; 244) et l'autre élément d'accouplement (14 ; 214) sont prévues des surfaces de réglage (44c1, 38b ; 244e1, 282) coopérantes, l'élément de blocage (44 ; 244) pouvant être déplacé, par les surfaces de réglage (44c1, 38b ; 244e1, 282), de sa position de blocage dans sa position d'autorisation, lors d'un déplacement de l'élément de sûreté (36 ; 236) de sa position de déverrouillage dans sa position de sûreté, et l'élément de blocage (44 ; 244) se replaçant automatiquement dans la position de blocage, par suite de sa précontrainte, sensiblement lorsqu'est atteinte la position de sûreté.

8. Dispositif d'accouplement selon l'une des revendications 1 à 6, caractérisé
en ce que sur l'élément de blocage (144) et sur un élément d'accouplement (112) sont prévues des surfaces de réglage (144e, 172) coopérantes, l'élément de blocage (144) pouvant être déplacé, par les surfaces de réglage (144e, 172), de sa position de blocage dans sa position d'autorisation, lors d'un déplacement de l'élément de sûreté (136) de sa position de sûreté dans sa position de déverrouillage, et l'élément de blocage (144) se replaçant automatiquement dans la position de blocage, par suite de sa précontrainte, lorsqu'est sensiblement atteinte la position de sûreté.

9. Dispositif d'accouplement selon l'une des revendications précédentes, caractérisé
en ce que les éléments d'accouplement (12, 14 ; 112, 114 ; 212, 214) sont conçus de manière à pouvoir être guidés ensemble dans une direction (A) sensiblement orthogonale au plan d'accouplement, en vue de l'accouplement avec des surfaces de contact (16a, 14a ; 116a, 114a ; 216a, 214a), sensiblement parallèles entre elles.

10. Dispositif d'accouplement selon l'une des revendications précédentes, caractérisé
en ce qu'à l'extrémité du tenon (20 ; 120 ; 220), éloignée de la surface de contact (16a ; 116a ; 216a), sont prévues quatre saillies de verrouillage (22 ; 122 ; 222), qui sont sensiblement équidistantes de son pourtour extérieur et qui présentent chacune une extension angulaire d'environ 45°.

11. Dispositif d'accouplement selon l'une des revendications précédentes, caractérisé
en ce qu'au moins l'un des éléments d'accouplement présente une plaque d'accouplement (16 ; 116 ; 216), sensiblement rectangulaire, qui est formée dans la région des angles du rectangle en vue de la fixation sur une unité de construction supérieure, et qui est pourvue en particulier de perçages (18 ; 118 ; 218) destinés à recevoir des boulons de fixation.

12. Dispositif d'accouplement selon les revendications 10 et 11, caractérisé
en ce que les saillies de verrouillage (22 ; 122 ; 222) du deuxième élément d'accouplement (12 ; 112 ; 212) sont sensiblement tournées vers les angles de la plaque d'accouplement (16 ; 116 ; 216), dans la position d'accouplement.

13. Dispositif d'accouplement selon l'une des revendications précédentes, caractérisé
en ce que l'évidement (26) ou le tenon est formé d'un seul tenant sur au moins l'un des éléments d'accouplement (14).
